# EUROPEAN PATENT SPECIFICATION

(11) **EP 3 345 875 B1**
(45) Date of publication and mention of the grant of the patent: **05.10.2022**
(21) Application number: 16841540.4
(22) Date of filing: 19.08.2016
(51) Int. Cl.: C03B 37/16, D04H 1/4218

(54) **METHOD FOR MANUFACTURING GLASS CHOPPED STRANDS AND METHOD FOR MANUFACTURING GLASS CHOPPED STRAND MAT**
VERFAHREN ZUR HERSELLUNG VON GLASSCHNITTFASERN UND VERFAHREN ZUM HERSTELLEN EINER GLASSCHNITTFASERMATTE
PROCÉDÉ DE FABRICATION DE FILS DE VERRE COUPÉS ET PROCÉDÉ DE FABRICATION D'UN MATELAS DE FILS DE VERRE COUPÉS

(30) Priority: 03.09.2015 JP 2015174026
(43) Date of publication of application: 11.07.2018
(73) Proprietor: Nippon Electric Glass Co., Ltd., Otsu-shi Shiga 520-8639 (JP)
(72) Inventor: KIJIMA, Akio, Otsu-shi Shiga 520-8639 (JP); SUGIMOTO, Kiyomasa, Otsu-shi Shiga 520-8639 (JP)
(74) Representative: Maiwald Patent- und Rechtsanwaltsgesellschaft mbH
(86) International application number: PCT/JP2016/074245
(87) International publication number: WO 2017/038508

(56) References cited:
- JP-A- S5 836 863
- JP-A- H10 226 460
- JP-A- H10 291 832
- JP-A- H10 291 832
- JP-A- H10 296 867
- JP-A- H10 296 868
- JP-A- H10 297 932
- JP-A- 2001 233 630
- JP-A- 2003 201 150
- JP-A- 2008 031 041
- JP-A- 2011 058 102
- JP-A- 2011 058 102
- JP-U- S62 136 465
- JP-U- S62 136 465

## Description

### TECHNICAL FIELD

The present invention relates to a method for manufacturing glass chopped strands, the method comprising forming a doubled glass strand by combining glass strands drawn from cakes formed by winding the glass strands; and cutting, into a predetermined length, the doubled glass strand without winding the doubled glass strand to form a roving and to a method for manufacturing a glass chopped strand mat by matting the glass chopped strands.

### BACKGROUND ART

Conventionally, as a method for manufacturing glass chopped strands, it is known to combine glass strands drawn from a plurality of cakes to form a doubled glass strand and cut the doubled glass strand to obtain glass chopped strands. The glass chopped strands are, for example, deposited into a sheet and bound by a binder to be formed into a glass chopped strand mat (see, for example, Patent Document 1). There is also a method where a doubled glass strand, formed in advance from a plurality of cakes, is wound to form a roving (see, for example, Patent Document 2) and glass chopped strands or a glass chopped strand mat is obtained from the doubled glass strand unwound from the roving. JP 2001 233630 A describes a method of producing chopped strands, a producing machine thereof and chopped strands produced by this production method.

### PRIOR ART DOCUMENT

### PATENT DOCUMENTS

Patent Document 1: Japanese Laid-Open Patent Publication No. 2011-99190
Patent Document 2: Japanese Laid-Open Patent Publication No. S58-36863

### SUMMARY OF THE INVENTION

### PROBLEMS THAT ARE TO BE SOLVED BY THE INVENTION

When glass chopped strands obtained by cutting a doubled glass strand become lumped (bundled), the dispersibility of the glass chopped strands is lowered. That is, in manufacturing a glass chopped strand mat, unevenness arises in the density of the glass chopped strands, and the uniformity of the mat is thereby lowered.

The present invention has been made to solve the above problem and an object thereof is to provide a method for manufacturing glass chopped strands having a satisfactory dispersibility and a method for manufacturing a glass chopped strand mat without unevenness in the density of the glass chopped strands.

### MEANS FOR SOLVING THE PROBLEMS

In order to solve the above problem and in accordance with one aspect of the present invention, a method for manufacturing glass chopped strands is provided that forming a doubled glass strand by combining glass strands drawn from cakes formed by winding the glass strands; and cutting, into a predetermined length, the doubled glass strand without winding the doubled glass strand to form a roving. The doubled glass strand, from which the glass chopped strands are manufactured, is formed by combining a first glass strand or strands that are twisted clockwise when drawn from some of the cakes and a second glass strand or strands that are twisted counterclockwise when drawn from the rest of the cakes.

With the present method, by combining the first glass strand or strands that are twisted clockwise and the second glass strand or strands that are twisted counterclockwise, the doubled glass strand is put in a state where the glass strands having the two different types of twist of clockwise and counterclockwise coexist together. The glass chopped strands, obtained by subsequently cutting the doubled glass strand into the predetermined length, thus have a satisfactory dispersibility.

In the method for manufacturing glass chopped strands, it is preferable for the percentage of the number of the first glass strand or strands with respect to the total number of the first glass strand or strands and the second glass strand or strands in the doubled glass strand to be 25 to 75%.

With the present method, the glass strands having the two different types of twist coexist together at appropriate proportions in the doubled glass strand, therefore contributing to improvement of the dispersibility when the doubled glass strand is subsequently cut into the glass chopped strands.

In the method for manufacturing glass chopped strands, it is preferable for the cakes to be divided filament cakes.

Among cakes, there are a cake (hereinafter referred to as single filament cake) formed by winding, around a single collet, a glass strand that is formed by combining, into a single strand, a plurality of glass monofilaments drawn from a single bushing having several dozen to several thousand nozzles and a divided filament cake, formed by winding, around a single collet, glass strands that are formed by combining, into a plurality of strands, a plurality of glass monofilaments drawn from a single bushing. The variation of length among the glass monofilaments constituting a single glass strand wound in a divided filament cake is small in comparison to the variation of length among the glass monofilaments that constitute the single glass strand wound in a single filament cake. Therefore, with a divided filament cake, there is little entanglement of glass monofilaments with each other. By the present method, the doubled glass strand obtained from the divided filament cakes is cut and therefore the glass chopped strands are improved in dispersibility.

In accordance with another aspect of the present invention, a method for manufacturing a glass chopped strand mat is provided that includes depositing the glass chopped strands manufactured by the above-described method into a sheet and then binding the glass chopped strands to each other to manufacture the glass chopped strand mat.

With the present method, since the glass chopped strand mat is manufactured using the glass chopped strands manufactured from the doubled glass strand in which the glass strands having the two different types of twist of clockwise and counterclockwise coexist and are combined, it is possible to obtain a glass chopped strand mat of high uniformity without unevenness in the density of the glass chopped strands.

### EFFECTS OF THE INVENTION

With the method for manufacturing glass chopped strands according to the present invention, glass chopped strands having an improved dispersibility can be obtained, and with the method for manufacturing a glass chopped strand mat according to the present invention, a glass chopped strand mat that is without unevenness in density can be obtained.

Other aspects and merits of the present invention shall be made clear from the following description together with the drawings that illustrate an example of the technical ideas of the present invention.

### BRIEF DESCRIPTION OF THE DRAWINGS

Fig. 1 is a schematic view for describing a method for manufacturing glass chopped strands (mat) according to a first embodiment.
Fig. 2(a) is a schematic view for describing a method for manufacturing glass chopped strands (mat) according to a second embodiment and shows a pre-process before manufacturing a roving, Fig. 2 (b) is similarly a schematic view for describing the method for manufacturing glass chopped strands (mat) according to the second embodiment and shows a post-process after the manufacture of the roving.
Fig. 3 is a schematic view for describing forming of a doubled glass strand according to another embodiment.

### MODES FOR CARRYING OUT THE INVENTION

### (First Embodiment)

Methods for manufacturing glass chopped strands and a glass chopped strand mat will now be described.

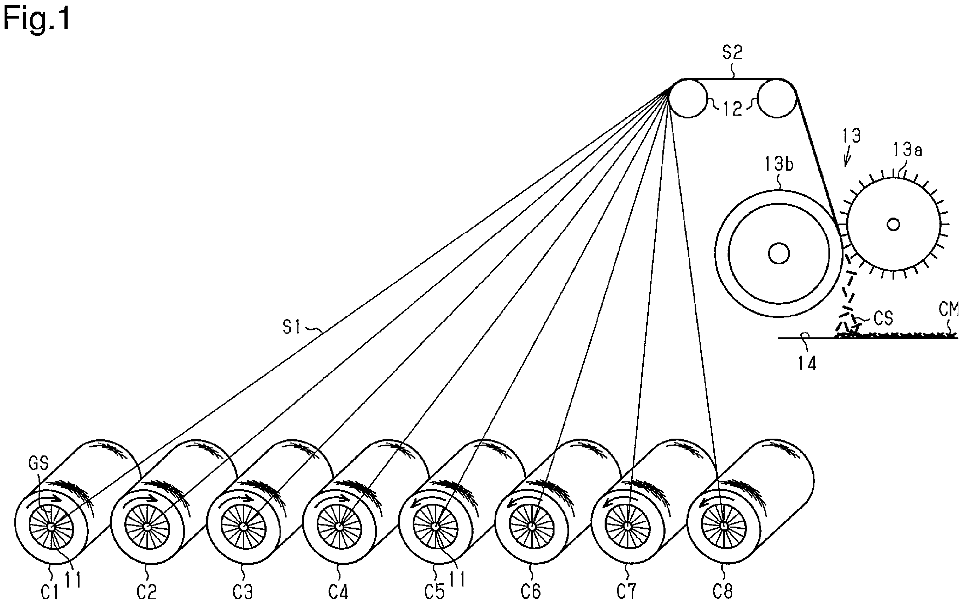

As shown in Fig. 1, eight cylindrical cakes C1 to C8 are used in manufacturing glass chopped strands CS and a glass chopped strand mat CM of the present embodiment. The cakes C1 to C8 have winding shafts extending parallel to a floor surface, that is, in a horizontal direction and are arranged so as to be parallel to each other. Each of the cakes C1 to C8 is a so-called divided filament cake in which sixteen glass strands GS are wound.

Each divided filament cake is manufactured as follows. First, molten glass is drawn from a bushing nozzle having several dozen to several thousand nozzles to form glass monofilaments corresponding to the number of nozzles. Next, sixteen glass strands are prepared, each by combining one-sixteenth of the total number of glass monofilaments and applying a sizing agent, and the sixteen glass strands are wound around a single collet. Lastly, the collet is pulled out.

Sixteen glass strands GS are drawn at the same time from the inner part of each of the cakes C1 to C8. A drawing portion 11 is provided at one end of the winding shaft of each of the cakes C1 to C8, and a glass strand S1, in which the sixteen glass strands GS are made into one, is drawn from each drawing portion 11.

With the present embodiment, the winding direction of some of the cakes C1 to C8 differs from the winding direction of the rest of the cakes. Specifically, cakes C1 to C4 are first cakes in which the glass strands GS are wound clockwise as viewed from the drawing portion 11 side (that is, the glass strands GS are drawn clockwise from the inner circumference) and cakes C5 to C8 are second cakes in which the glass strands GS are wound counterclockwise as viewed from the drawing portion 11 side (that is, the glass strands GS are drawn counterclockwise from the inner circumference). In the present description, the glass strands GS that are drawn and twisted from the first cakes shall be denoted as first glass strands and the glass strands GS that are drawn and twisted from the second cakes shall be denoted as second glass strands. That is, since although twisting is applied to the glass strand S1 drawn from each of the cakes C1 to C8, the direction of winding as viewed from the drawing portion 11 side differs between the cakes C1 to C4 and the cakes C5 to C8, glass strands (first glass strands and second glass strands) that differ in twist direction coexist together.

At guide portions 12, the glass strands S1, which have been drawn and twisted from the respective cakes C1 to C8 through the drawing portions 11, are combined into a doubled glass strand S2 and guided to a cutting apparatus 13. At the cutting apparatus 13, the doubled glass strand S2 is put in between blade portions of a cutter roll 13a and an outer peripheral surface of an elastic roll 13b to cut the doubled glass strand S2 into glass chopped strands CS with a length of 10 to 100 mm.

The winding direction (drawing direction) as viewed from the drawing portion 11 side differs between the cakes C1 to C4 and the cakes C5 to C8 and therefore glass strands S1 having two different types of twist, that is, glass strands (first glass strands) twisted in the clockwise direction and glass strands (second glass strands) twisted in the counterclockwise direction coexist together in the doubled glass strand S2. Consequently, the glass chopped strands CS, obtained by cutting the doubled glass strand S2, are satisfactory in dispersibility. This is presumed to be because the glass strands S1 differ mutually in twist direction and the dispersibility of the glass chopped strands CS is thus improved by actions of forces in directions in which twist is released after cutting.

The glass chopped strands CS are then formed into a glass chopped strand mat CM by undergoing a process of, for example, spraying a binder, while being conveyed downstream by a conveying apparatus 14. With the present embodiment, due to the improvement of the dispersibility of the glass chopped strands CS, there is no unevenness in the density of the glass chopped strand mat CM and improvement of uniformity is achieved.

Incidentally, with a comparative example of glass chopped strands CS in which all eight cakes C1 to C8 are first cakes (cakes with the winding direction of the glass strands GS as viewed from the drawing portion 11 side being clockwise), the rate of occurrence of defective dispersion was 20%. On the other hand, with the present embodiment, the rate of occurrence of defective dispersion was not more than 5%, which was a significant decrease.

Next, characteristic effects of the present embodiment will be described.
(1) By combining the first glass strands that are drawn and twisted from the cakes C1 to C4 (first cakes) and the second glass strands that are drawn and twisted from the cakes C5 to C8 (second cakes), the doubled glass strand S2 is put in a state where the glass strands S1 having the two different types of twist of clockwise and counterclockwise coexist together. The glass chopped strands CS, obtained by subsequently cutting the doubled glass strand S2 into a predetermined length, thus have a satisfactory dispersibility. Also, the glass chopped strand mat CM, manufactured using the glass chopped strands CS, is high in uniformity.
(2) Due to the number of the first glass strands and the number of the second glass strands in the doubled glass strand S2 being the same as each other, the glass strands S1 having the two different types of twist of clockwise and counterclockwise coexist together at appropriate proportions in the doubled glass strand S2, therefore contributing to improvement of the dispersibility when the doubled glass strand S2 is subsequently formed into the glass chopped strands CS.

### (Second Embodiment, which is not part of the claimed invention)

A method by which a doubled glass strand is formed from cakes, a roving is formed by winding the doubled glass strand, and glass chopped strands and a glass chopped strand mat are manufactured from the roving will now be described.

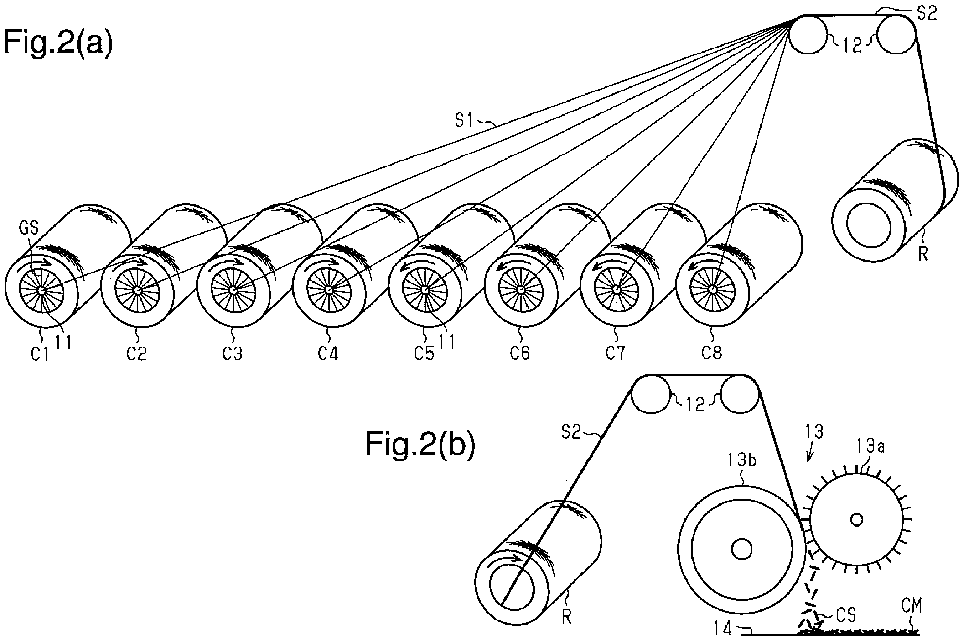

As shown in Fig. 2 (a), the method of the present embodiment includes the forming of a roving R. That is, glass strands S1 are drawn from cakes C1 to C4, which are first cakes in which glass strands GS are wound clockwise as viewed from a drawing portion 11 side, and cakes C5 to C8, which are second cakes in which glass strands GS are wound counterclockwise as viewed from the drawing portion 11 side, and formed into a single doubled glass strand S2 via guide portions 12 and then wound. The wound body thus obtained is the roving R. The doubled glass strand S2, which is wound and forms the roving R, is in a state where the glass strands S1 having the two different types of twist of clockwise and counterclockwise coexist together.

Subsequently, as shown in Fig. 2 (b), the doubled glass strand S2 is drawn from the roving R and guided via guide portions 12 to a cutting apparatus 13 to manufacture glass chopped strands CS and a glass chopped strand mat CM in the same manner as in the first embodiment. By using the roving R, formed by winding the doubled glass strand S2, in which the glass strands S1 having the two different types of twist coexist together, the dispersibility of the glass chopped strands CS is satisfactory and the uniformity of the glass chopped strand mat CM is also satisfactory as in the first embodiment.

Next, characteristic effects of the present embodiment will be described.
(1) The glass chopped strands CS having a satisfactory dispersibility can be obtained and the glass chopped strand mat CM that is without unevenness in density and is high in uniformity can also be obtained because the roving R is manufactured from the doubled glass strand S2, in which the glass strands S1 having the two different types of twist coexist together, and the glass chopped strands CS are manufactured from the doubled glass strand S2 drawn from the roving R.
(2) Due to being of a mode of using the roving R formed by winding the doubled glass strand S2, a pre-process before the manufacture of the roving R and a post-process after the manufacture of the roving R can be arranged at separate, independent manufacturing lines.

The embodiments described above may be changed as follows.
- Although in each of the embodiments described above, all of the cakes C1 to C8 are laid out so that the winding shafts extend in the horizontal direction, the layout is not restricted thereto. For example, all of the cakes C1 to C8 may be laid out so that the winding shafts extend in a vertical direction. Alternatively, the direction may be oblique instead of being horizontal or vertical.

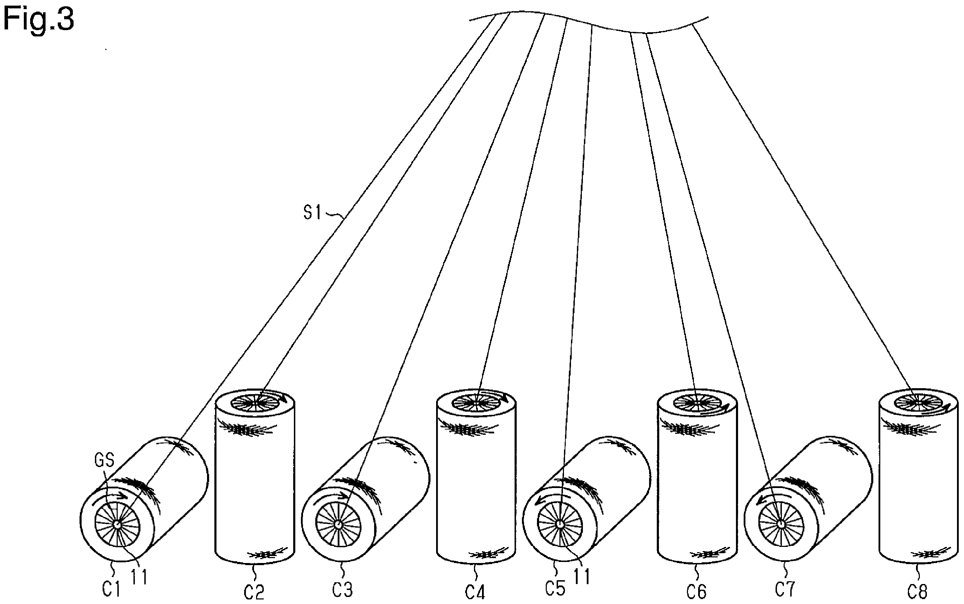

Alternatively, as shown in Fig. 3, the cakes C1 to C8 may be laid out so that winding shafts extending in the horizontal direction and those extending in the vertical direction alternate. That is, the directions in which the winding shafts of the cakes C1 to C8 extend do not have to be aligned in a single direction.
- Although the glass chopped strands CS are manufactured from the eight cakes C1 to C8 in the first embodiment described above and the roving R (and thereafter the glass chopped strands CS) is manufactured from the eight cakes C1 to C8 in the second embodiment described above, the number of cakes may be less than eight or may be greater than eight.
- Although in each of the embodiments described above, each of the cakes C1 to C8 is a divided filament cake, in which sixteen glass strands GS are wound, the number of glass strands GS wound in each of the cakes C1 to C8 may be greater than sixteen or may be less than sixteen.
- Although in each of the embodiments described above, the first cakes (cakes C1 to C4) and the second cakes (cakes C5 to C8) are equal to each other in number, these do not have to be equal in number. However, it is preferable for the number of either of the first and second cakes to be 25 to 75% of the total number of first and second cakes.
- Although in each of the embodiments described above, the layout is such that four juxtaposed first cakes (cakes C1 to C4) are positioned next to four juxtaposed second cakes (cakes C5 to C8), the layout is not restricted thereto. For example, the first cakes and the second cakes may be laid out alternately.
- Although in each of the embodiments described above, the drawing portions 11 are installed, the drawing portions 11 do not have to be installed. In this case, with the cakes C1 to C4, the glass strands GS are drawn clockwise when the cakes are viewed from the side at which the glass strands GS are drawn, and with the cakes C5 to C8, the glass strands GS are drawn counterclockwise when the cakes are viewed from the side at which the glass strands GS are drawn. At the guide portions 12, the glass strands GS are combined into the doubled glass strand S2 and guided to the cutting apparatus 13.

The present invention is not limited to the examples disclosed. For example, the exemplified features should not be understood as being essential to the present invention, and rather, the subject matter of the present invention may exist in fewer features than all features of a specific embodiment disclosed. The present invention is defined by the claims.

### DESCRIPTION OF THE REFERENCE NUMERALS

11: drawing portion, C1 to C4: cake (first cake), C5 to C8: cake (second cake), GS: glass strand, S1: glass strand, S2: doubled glass strand, CS: glass chopped strands, CM: glass chopped strand mat.

## Claims

1. A method for manufacturing glass chopped strands (CS), the method comprising forming a doubled glass strand (S2) by combining glass strands (S1) drawn from cakes (C) formed by winding the glass strands (S1); and
cutting, into a predetermined length, the doubled glass strand (S2) without winding the doubled glass strand (S2) to form a roving,
**characterised in that**
the doubled glass strand (S2), from which the glass chopped strands (CS) are manufactured, is formed by combining a first glass strand or strands (S1) that are twisted clockwise when drawn from some of the cakes (C) and a second glass strand or strands (S1) that are twisted counterclockwise when drawn from the rest of the cakes (C).

2. The method according to claim 1, wherein the percentage of the number of the first glass strand or strands (S1) with respect to the total number of the first glass strand or strands (S1) and the second glass strand or strands (S1) in the doubled glass strand (S2) is 25 to 75%.

3. The method according to claim 1 or 2, wherein the cakes (C) are divided filament cakes.

4. A method for manufacturing a glass chopped strand mat (CM), comprising depositing the glass chopped strands (CS) manufactured by the method according to any one of claims 1 to 3 into a sheet and then binding the glass chopped strands (CS) to each other to manufacture the glass chopped strand mat (CM).

## Patentansprüche

1. Verfahren zur Herstellung von Glasschnittfasern (CS), wobei das Verfahren umfasst Bilden eines verdoppelten Glasstrangs (S2) durch Kombinieren von Glassträngen (S1), die aus Kuchen (C), die durch Wickeln der Glasstränge (S1) gebildet werden, gezogen werden; und
Schneiden des verdoppelten Glasstrangs (S2) auf eine vorbestimmte Länge, ohne den verdoppelten Glasstrang (S2) zu einem Vorgarn zu wickeln,
**dadurch gekennzeichnet, dass** der verdoppelte Glasstrang (S2), aus dem die Glasschnittfasern (CS) hergestellt werden, durch Kombinieren eines ersten Glasstrangs oder -stränge (S1), die im Uhrzeigersinn verdrillt werden, wenn sie von einigen der Kuchen (C) gezogen werden, und eines zweiten Glasstrangs oder -stränge (S1), die gegen den Uhrzeigersinn verdrillt werden, wenn sie von den restlichen Kuchen (C) gezogen werden, gebildet wird.

2. Verfahren nach Anspruch 1, wobei der Prozentsatz der Anzahl des ersten Glasstrangs oder der ersten Glasstränge (S1) in Bezug auf die Gesamtanzahl des ersten Glasstrangs oder der ersten Glasstränge (S1) und des zweiten Glasstrangs oder der zweiten Glasstränge (S1) in dem verdoppelten Glasstrang (S2) 25 bis 75 % beträgt.

3. Verfahren nach Anspruch 1 oder 2, wobei die Kuchen (C) geteilte Filamentkuchen sind.

4. Verfahren zum Herstellen einer Glasschnittfasermatte (CM), umfassend das Ablegen der durch das Verfahren nach einem der Ansprüche 1 bis 3 hergestellten Glasschnittfasern (CS) zu einer Platte und dann das Binden der Glasschnittfasern (CS) aneinander zur Herstellung der Glasschnittfasermatte (CM).

## Revendications

1. Procédé de fabrication de fils de verre coupés (CS), le procédé comprenant
la formation d'un fil de verre doublé (S2) en combinant des fils de verre (S1) tirés à partir de gâteaux (C) formés en enroulant les fils de verre (S1) ; et
la coupe, à une longueur prédéterminée, du fil de verre doublé (S2) sans enrouler le fil de verre doublé (S2) pour former une mèche,
**caractérisé en ce que**
le fil de verre doublé (S2), à partir duquel les fils de verre coupés (CS) sont fabriqués, est formé en combinant un premier ou des premiers fils de verre (S1) qui sont torsadés dans le sens horaire lorsqu'ils sont tirés à partir de certains des gâteaux (C) et un deuxième ou des deuxièmes fils de verre (S1) qui sont torsadés dans le sens antihoraire lorsqu'ils sont tirés à partir du reste des gâteaux (C).

2. Le procédé selon la revendication 1, sachant que le pourcentage du nombre du premier ou des premiers fils de verre (S1) par rapport au nombre total du premier ou des premiers fils de verre (S1) et du deuxième ou des deuxièmes fils de verre (S1) dans le fil de verre doublé (S2) est de 25 à 75 %.

3. Le procédé selon la revendication 1 ou 2, sachant que les gâteaux (C) sont des gâteaux à filament divisé.

4. Procédé de fabrication d'un mat de fils de verre coupés (CM), comprenant le dépôt des fils de verre coupés (CS) fabriqués par le procédé selon l'une quelconque des revendications 1 à 3 en une feuille et ensuite la liaison des fils de verre coupés (CS) les uns aux autres pour fabriquer le mat de fils de verre coupés (CM).
